# EUROPÄISCHE PATENTANMELDUNG

(11) **EP 3 453 458 A1**
(43) Veröffentlichungstag der Anmeldung: **13.03.2019**
(21) Anmeldenummer: 17189594.9
(22) Anmeldetag: 06.09.2017
(51) Int. Cl.: B02C 17/18, B02C 17/24, B02C 25/00

(54) **VERFAHREN UND VORRICHTUNG ZUM LÖSEN EINER FESTGEKLEBTEN LADUNG VON DER INNENSEITE EINES MAHLROHRS EINER ROHRMÜHLE**

(71) Anmelder: Siemens Aktiengesellschaft, 80333 München (DE)
(72) Erfinder: Fodor, Dan Niculae, 91227 Leinburg-Entenberg (DE); Procksch, Andreas, 90469 Nürnberg (DE); Tischler, Kurt, 91052 Erlangen (DE)

(57) **Zusammenfassung**

Die Erfindung betrifft ein Verfahren und eine Vorrichtung zum Lösen einer festgeklebten Ladung (3) von der Innenwand eines Gefäßes (2), insbesondere eines Mahlrohrs (2). Um die festgeklebte Ladung (3), die auch als "frozen charge" bezeichnet wird, abzulösen, wird der Bewegung eine wiederkehrende Störung auf eine Drehbewegung des Mahlrohrs (2) aufgeprägt. Die wiederkehrende Störung wird vorzugsweise durch ein, dem Motorstrom (I) aufgeprägter, Störstrom (ΔI) erzeugt. Dabei wird der Störstrom (ΔI) vorzugsweise anhand der Art der Ladung und/oder anhand der physikalischen Eigenschaften der Rohrmühle ausgewählt. Durch die Erfindung wird das Lösen der festgeklebten Ladung (3) zumindest stark vereinfacht. Optional oder alternativ kann die wiederkehrende Störung auch durch eine mechanische Störung (ms) erfolgen.

## Beschreibung

Die Erfindung betrifft ein Verfahren und eine Vorrichtung zum Lösen einer festgeklebten Ladung von der Innenseite eines Mahlrohrs einer Rohrmühle. Weiter betrifft die Erfindung eine Rohrmühle.

Rohrmühlen werden vorzugsweise zum Mahlen von Materialien, wie Erzen, eingesetzt. Es ich nicht unüblich, dass der Betrieb einer Rohrmühle für eine längere Zeitdauer unterbrochen wird. In dieser Zeit steht die Rohrmühle still. Während des Stillstandes der Rohrmühle kann sich das im Mahlrohr der Rohrmühle befindliche Material festigen und an der Innenwand des Mahlrohrs festkleben. Derartig festgeklebtes, verfestigtes Material wird als festgeklebte Ladung oder auch als "frozen Charge" bezeichnet.

Wird die Rohrmühle nach längerem Stillstand wieder in Betrieb genommen, besteht die Gefahr, dass sich die festgeklebte Lösung in großer Höhe vom Mahlrohr (z.B. nach einer halben Umdrehung bzw. nach einer Drehung von etwa Phi=160° des Mahlrohrs) ablöst, abstürzt und beim anschließenden Aufschlag auf die Innenseite des Mahlrohrs erhebliche Schäden an der Rohrmühle bewirkt.

Deshalb existieren Einrichtungen, die das Vorhandensein der festgeklebten Ladung erkennen, wie in DE 35 28 409 A1 beschrieben.

EP 2 353 724 B1 schlägt ein Verfahren zum Lösen einer festgeklebten Ladung von der Innenwand eines Mahlrohrs vor, wobei das Mahlrohr mindestens einmal bei einem vorgegebenen Drehwinkel abrupt gebremst wird.

Es ist Aufgabe der Erfindung, Rohrmühlen ohne Schäden durch eine festgeklebte Ladung zu betreiben.

Diese Aufgabe wird mit einem Verfahren nach Anspruch 1 gelöst.

Weiter wird die Aufgabe mit Hilfe einer Vorrichtung gemäß Anspruch 12 sowie einer Rohrmühle gemäß Anspruch 17 gelöst.

Zum Lösen der festgeklebten Ladung von der Innenwand wird vorgeschlagen, die Drehbewegung des Mahlrohrs mit einer Störung, beispielhaft in Form einer Schwingung, zu beaufschlagen. Zur Bewegung des Gefäßes wird ein Motorstrom bereitgestellt.

Mit anderen Worten soll eine, insbesondere der Bauteilstruktur angepasste, Störung, insbesondere einer Schwingung auf den Motorstrom aufgeprägt werden. Die Störung kann jede Frequenz sein, sie kann sowohl harmonisch als auch unharmonisch sowie sowohl periodisch als auch nicht-periodisch sein. Die Störung kann auch als Stoß aufgeprägt sein.

Vorzugsweise erfolgt die Störung solange bis sich die festgeklebte Ladung von der Innenwand des Gefäßes gelöst hat.

Die Störung kann in Form einer periodischen oder nichtperiodischen Schwingung, durch wiederholte Kraftstöße, durch wiederholtes abruptes Abbremsen der Drehbewegung und/oder durch wiederholte Kraftstöße in Drehrichtung oder senkrecht auf die Oberfläche des Gefäßes erfolgen. Die Kraftstöße sind vorzugsweise als abrupte Steigerungen des Drehmoments und/ oder der Drehzahl ausgebildet. Insbesondere mechanische Störungen, beispielhaft Kraftstöße auf die Oberfläche des Gefäßes, werden bevorzugt mit einem mechanischen Störglied oder einer mechanischen Anregungseinheit auf das Gefäß aufgeprägt.

Vorteilhaft kann eine wiederkehrende Störung durch eine mechanische Einwirkung auf das Gefäß und damit auf die (festgeklebte) Ladung erfolgen.

Die mechanische Störung kann durch einen Rüttler erfolgen, wobei der Rüttler vorzugsweise direkt mit dem Gefäß verbunden ist. Die mechanische Einwirkung auf das Gefäß oder auf ein anderes Element der industriellen Anlage erfolgt mit Hilfe eines Störgliedes. Das Störglied ist vorzugsweise mit einer Steuereinrichtung verbunden, wobei die Steuereinrichtung insbesondere bei Vorliegen einer festgeklebten Ladung das Störglied zu der wiederkehrenden mechanischen Störung anregt. Das Störglied kann als Hydraulikzylinder ausgeführt sein, bei dessen Ausfahren des Aktors der Aktor einen Kraftstoß auf das Gefäß überträgt.

Insbesondere mit Hilfe des Frequenzumrichters erfolgt die Beaufschlagung der Störung durch ein Störsignal, welches auf einen Motorstrom aufgeschaltet wird. Der Motorstrom ist meist ein Drei-Phasen-Wechselstrom.

Grundlage für den Drei-Phasen-Wechselstrom ist eine Drei-Phasen Wechselspannung. Eine Störung kann demnach eine Störspannung sein, welche auf die Drei-Phasen-Wechselspannung addiert wird. Im Folgenden wird vereinfacht nur auf den Motorstrom und auf einen Störstrom Bezug genommen.

Der Einsatz der Erfindung ist nicht auf eine Rohrmühle beschränkt, sondern kann auch auf weitere Vorrichtungen im Bereich des Bergbaus oder der Schwerindustrie angewandt werden. Zudem kann die Erfindung bei einer Vertikalmühle angewandt werden.

Den oben genannten Anwendungsbeispielen der Erfindung ist gemein, dass eine Oberfläche mit einer festgeklebten Ladung durch die Erfindung von der festgeklebten Ladung befreit werden kann. Insbesondere bei einem Trichter ist ein mechanisches Störglied zur Aufprägung einer wiederkehrenden (mechanischen) Störung bevorzugt. Der Übersicht halber wird die Erfindung im Folgenden anhand einer Rohrmühle mit einem Mahlrohr beschrieben. Die Erfindung ist jedoch auch auf eine andere industrielle Anlage zur Bearbeitung eines Grundstoffes, beispielhaft für die Aufbereitung von Erz oder Gestein, geeignet.

Bei dem Verfahren zum Lösen einer festgeklebten Ladung von der Innenwand eines Mahlrohrs einer Rohrmühle dient eine Antriebsvorrichtung zum Lösen der festgeklebten Ladung und zur Bewegung des Mahlrohrs, wobei die Antriebsvorrichtung zwei Betriebsarten umfasst, wobei in der ersten Betriebsart das Antriebssystem die Drehbewegung des Mahlrohrs zum Mahlen ausführt, wobei in der zweiten Betriebsart das Antriebssystem die festgeklebte Ladung von der Innenwand des Gefäßes löst, wobei in der zweiten Betriebsart ein Motor des Antriebssystems durch eine widerkehrende Störung in seiner Drehbewegung wiederkehrend gestört ist.

Nach Start der Rohrmühle kann die Antriebsvorrichtung zunächst in der zweiten Betriebsart ausgeführt werden. Insbesondere nach Feststellen einer festgeklebten Ladung dient die zweite Betriebsart zur Vorbereitung einer sicheren ersten Betriebsart.

Unter der (Dreh-)Bewegung wird hier in der Regel eine Drehbewegung des Mahlrohrs verstanden. Die Drehbewegung erfolgt vorzugsweise mit einer konstanten Drehgeschwindigkeit. Bei einer Störung wird vorzugsweise die Drehgeschwindigkeit der Drehbewegung des Mahlrohrs zeitlich verändert.

Bei der ersten Betriebsart dreht sich das Mahlrohr in der Regel ohne Drehbeschleunigung um seine Drehachse.

Bei der widerkehrenden Störung handelt es sich um eine Abweichen einer gleichmäßigen Drehbewegung oder einer gleichmäßigen Beschleunigungsbewegung. Die wiederkehrende Störung kann sich durch eine zeitlich nicht konstante Beschleunigung auszeichnen.

Die Störung der Drehbewegung erfolgt vorzugsweise durch ein dem Motorstrom aufgeprägtes Störsignal.

Durch das vorstehend beschriebene Verfahren ist ein besonders einfaches Lösen einer festgeklebten Ladung möglich.

In einer vorteilhaften Ausgestaltung der Erfindung führt das Störsignal zu einer wiederkehrenden ruckartigen Bewegung des Mahlrohrs.

Das Störsignal ist vorzugsweise als ein kurzzeitiger Anstieg der Spannung und/oder des Motorstrom ausgebildet. Das Störsignal kann auch ein Wechselstrom sein, wobei die Frequenz des Wechselstroms ungleich der Frequenz des Drei-Phasen Motorstroms ist.

Der Einsatz eines Störsignals, welches auf den Motorstrom aufgeprägt wird, erlaubt eine sehr einfache Modulation der Drehbewegung des Mahlrohrs. Somit kann eine festgeklebte Ladung in einem Mahlrohr einfach und unkompliziert gelöst werden.

In einer weiteren vorteilhaften Ausgestaltung der Erfindung ist das Störsignal periodisch.

Ein periodisches Störsignal ist entweder ein sinusförmiges Signal oder ein regelmäßig wiederkehrender Stromanstieg und/ oder ein regelmäßig wiederkehrender Stromabfall.

Durch eine periodisch wiederkehrende Störung kann besonders schonend die Innenseite des Mahlrohrs von einer festgeklebten Ladung befreit werden.

In einer weiteren vorteilhaften Ausgestaltung der Erfindung wird die Störung bis zu einem einstellbaren Zeitpunkt auf die Bewegung moduliert.

In der Regel dauert eine Befreiung des Mahlrohrs von einer festgeklebten Ladung zwischen einer Minute und etwa 30 Minuten. Somit ist es sinnvoll, dass die Antriebsvorrichtung nach dieser Zeitdauer selbstständig in den ersten Betriebszustand übergeht, insofern keine festgeklebte Ladung detektiert wird.

Zur weiteren Erhöhung der Betriebssicherheit erfolgt der Übergang zwischen den Betriebszuständen vorzugsweise lediglich dann, falls keine festgeklebte Ladung festgestellt werden kann.

Hierdurch ist eine vereinfachte Bedienung der Rohrmühle möglich.

In einer weiteren vorteilhaften Ausgestaltung der Erfindung erfolgt die Störung mit einem veränderlichen Zeitanstand t.

Bevorzugt nimmt die Zeitdauer zwischen den einzelnen Störsignalen mit der Zeit ab, so dass der Zeitabstand der wiederkehrenden Störung verkürzt wird.

Hierdurch kann das Mahlrohr sowie das Antriebssystem der Rohrmühle geschont werden.

Vorzugsweise erfolgt die Störung durch Drehmoment-Stöße, die durch das jeweilige Störsignal auf die Drehbewegung des Mahlrohrs aufgeprägt werden.

Bei einer weiteren vorteilhaften Ausgestaltung der Erfindung nimmt die Störung in ihrer Amplitude zu.

Bevorzugt startet die zweite Betriebsphase mit einer geringen Amplitude. Die Amplitude steigt in der zweiten Betriebsphase dann zu einer maximalen Amplitude an und bleibt dann auf der maximalen Amplitude oder nimmt wieder ab. Die Amplitude kann durch eine Veränderung der Störspannung oder des Störstroms erhöht werden.

Da anfangs oft nicht ersichtlich ist, wie stark eine Störung sein muss, um die festgeklebte Ladung von der Innenwand des Mahlrohrs zu entfernen, ist ein zeitlicher Anstieg der Amplitude der Störung vorteilhaft. Ein Anstieg der Amplitude dient vorteilhaft zur Schonung des Mahlrohrs und/oder des Antriebssystems.

Bei einer weiteren vorteilhaften Ausgestaltung der Erfindung bewirkt die Störung eine Modulation der Drehbewegung des Mahlrohrs oder eine Modulation des auf das Mahlrohr wirkenden Drehmoments.

Durch das Störsignal kann sowohl die Drehgeschwindigkeit als auch das Drehmoment gesteuert als auch geregelt werden.

Durch eine Störung des Drehmoments als auch einer Störung der Drehgeschwindigkeit erfolgt vorzugsweise ein besonders genau einstellbarer Betrieb einer Rohrmühle, insbesondere im zweiten Betriebsmodus.

Bei einer weiteren vorteilhaften Ausgestaltung der Erfindung wird die Störung durch eine zusätzliche Spannung bzw. durch einen zusätzlichen Strom auf den Motor des Antriebs moduliert.

Besonders einfach ist die wiederkehrende Störung auf die Drehgeschwindigkeit oder auf das Drehmoment möglich.

Ein zusätzlicher Strom oder eine zusätzliche Spannung wird auf den Motorstrom bzw. die Motorspannung aufgeprägt.

Der zusätzliche Strom oder die zusätzliche Spannung wird vorzugsweise mit Hilfe des Frequenzumrichters bereitgestellt. Vorzugsweise ist der zusätzliche Motorstrom sinusförmig ausgeprägt. Durch die Modulation eines Drei-Phasen-Wechselstroms mit einer weiteren oszillierenden Spannung erfolgt eine besonders einfache und wirksame Störung der Drehbewegung des Mahlrohrs.

Vorzugsweise können der zusätzliche Störstrom oder die zusätzliche Störspannung durch das Abschalten eines Filters im Frequenzumrichter auf den Motorstrom bzw. der Motorspannung aufgeprägt werden.

Durch die Aufprägung einer zusätzlichen Spannung oder einem zusätzlichen Stroms, insbesondere einer Sinus-förmigen Spannung oder einem Sinus-förmigen Strom, ist eine besonders einfache Art und Weise, eine festgeklebte Ladung zu entfernen.

Bei einer weiteren vorteilhaften Ausgestaltung der Erfindung erfolgt die wiederkehrende Störung durch eine mechanische Einwirkung auf das Mahlrohr.

Die mechanische Störung wird vorzugsweise von einem mechanischen Störglied bereitgestellt. Das Störglied kann hydraulisch oder elektrisch angetrieben sein. Die mechanische Störung erfolgt vorzugsweise durch einen Kraftstoß auf das Mahlrohr. Die mechanische Störung kann auch durch einen sprunghaften Anstieg des Drehmoments erfolgen. Der jeweilige Kraftstoß kann in tangentialer Richtung zur Drehbewegung des Mahlrohrs, beispielsweise auf einen Vorsatz des Mahlrohrs, erfolgen. Die mechanische Störung, insbesondere der jeweilige Kraftstoß, kann auch zur Rotationsachse hin oder von dieser weg gerichtet sein. Vorzugsweise ist die mechanische Störung, insbesondere der jeweilige Kraftstoß, direkt auf die (festgeklebte) Ladung gerichtet, so dass die mechanische Störung direkt auf die Ladung wirkt und diese durch mechanisches Einwirken von der Innenseite des Mahlrohrs löst.

Möglich ist auch eine Kombination von der mechanischen Einwirkung auf das Mahlrohr und einer durch den Antrieb erfolgenden wiederkehrenden Störung.

Durch den Einsatz einer mechanischen Störung ist vorteilhaft eine unmittelbare Art des Lösens der festgeklebten Ladung von der Innenseite des Mahlrohrs möglich.

In einer weiteren vorteilhaften Ausgestaltung der Erfindung erfolgt die mechanische Störung mit Hilfe des Störgliedes anstelle von der Aufprägung der wiederkehrenden Störung mit Hilfe des Motors.

Durch das vollständige Ersetzen der antriebsseitigen Störung kann die Erfindung auch auf weitere Bauteile von einer Anlagen Anwendung finden.

Bei einer weiteren vorteilhaften Ausgestaltung der Erfindung wird die Störung bis zu einem vorgegebenen maximalen Drehwinkel moduliert.

Durch die Begrenzung des Drehwinkels im zweiten Betriebsmodus ist sichergestellt, dass eine sich plötzlich lösende festgeklebte Ladung keinen Schaden im Mahlrohr anrichtet. Vorteilhaft ist ein maximaler Drehwinkel auf etwa +/- 150° zur Sicherung des Mahlrohrs geeignet.

Bei einer weiteren vorteilhaften Ausgestaltung der Erfindung erfolgt eine Störung der Bewegung nur bei Feststellung einer festgeklebten Ladung im Mahlrohr.

Eine festgeklebte Ladung kann durch die Funktion des Drehmoments von dem Drehwinkel des Mahlrohrs ermittelt werden. Somit kann bei Erkennen einer festgeklebten Ladung das Antriebssystem der Rohrmühle in den zweiten Betriebszustand übergehen.

Vorteilshaft ist ein Anpassen der wiederkehrenden Störung anhand der mechanischen Eigenschaften der Rohrmühle oder des Antriebssystems.

Bevorzugt erfolgt ein Anpassen der wiederkehrenden Störung an die Art der Beladung der Rohrmühle und/oder an der Menge der Ladung, die sich in dem Mahlrohr befindet.

Durch diese beiden Anpassungen kann ein besonders wirksames Lösen einer festgeklebten Ladung erfolgen.

Bei der Vorrichtung zum Lösen einer festgeklebten Ladung von einem Mahlrohr umfasst die Vorrichtung einen Motor und eine Steuereinrichtung sowie optional einen Frequenzumrichter, wobei der Motor zur Drehbewegung des Mahlrohrs vorgesehen ist, dadurch gekennzeichnet, dass die Vorrichtung zur Durchführung eines hier beschriebenen Verfahrens ausgebildet ist.

Bei einer weiteren vorteilhaften Ausgestaltung der Erfindung weist die Vorrichtung eine Feststellungseinrichtung zur Feststellung der festgeklebten Ladung auf.

Die Feststellungseinrichtung dient zum Erkennen, ob eine Ladung in der Rohrmühle, insbesondere an der Innenseite des Mahlrohrs, festgeklebt ist. Vorzugsweise ist die Feststellungseinrichtung dem Frequenzumrichter oder der Steuereinrichtung zugeordnet. Die Feststellungseinrichtung kann das notwendige Drehmoment bestimmen, welches zur Drehung des Mahlrohrs aus der Ausgangslage benötigt wird. Bei Überschreiten eines bestimmten Drehmoments kann von einer festgeklebten Ladung ausgegangen werden. In diesem Fall erfolgt die Loslösung der festgeklebten Ladung beispielhaft mit Hilfe der zweiten Betriebsart der Rohrmühle.

Da nicht jedes Mal bei einem Anlaufen einer Rohrmühle eine Ladung an der Innenseite des Mahlrohrs angebacken oder festgeklebt ist, schont diese Ausgestaltung das Antriebssystem der Rohrmühle erheblich.

In einer weiteren vorteilhaften Ausgestaltung der Erfindung weist die Vorrichtung eine mechanische Bremse auf.

Mit der mechanischen Bremse kann die Störung der Drehbewegung wirksam unterstützt werden. So kann ein wiederkehrendes Störsignal die Drehbewegung des Mahlrohrs beschleunigen und die mechanische Bremse wieder verzögern.

Die mechanische Bremse erhöht somit die Lebensdauer des Antriebssystems.

Bei einer weiteren vorteilhaften Ausgestaltung der Erfindung ist der Motor als Segmentmotor ausgebildet.

Mit Hilfe eines Segmentmotors ist eine besonders schonende und wartungsarme Betriebsweise der Rohrmühle möglich. Vorzugsweise ist sowohl der Stator als auch der Motor als Segmentmotor ausgebildet.

Bei einer weiteren vorteilhaften Ausgestaltung der Erfindung treibt der Motor über ein Getriebe das Mahlrohr an.

Der Einsatz eines Getriebes erlaubt die Verwendung von kleineren Antrieben für eine Rohrmühle. Zudem kann ein besonders hohes Drehmoment auf die Rohrmühle aufgeprägt werden. Überdies ist diese Lösung mit einem Getriebe besonders preiswert.

Somit weist die Vorrichtung ein Getriebe auf, wobei das Getriebe zwischen dem Motor und dem Mahlrohr angeordnet ist.

Das Getriebe kann dem Motor und/oder dem Mahlrohr zugeordnet sein.

Bevorzugt weist eine industrielle Anlage, insbesondere eine Rohrmühle, eine solche Vorrichtung auf.

Unter einer solchen Anlage wird insbesondere eine Rohrmühle zum Mahlen von Gestein und Erz verstanden. Die Erfindung lässt sich jedoch auch auf weitere Anlagen in der verarbeitenden Industrie anwenden.

Vorzugsweise wird die Störspannung oder der Störstrom so auf die Motorspannung bzw. den Motorstrom aufgeprägt, dass jeweils eine der Resonanzen des Mahlrohrs angeregt wird. Hierfür wird beispielhaft eine Resonanzfrequenz bestimmt und diese Resonanz jeweils mit der wiederkehrenden Störung angeregt. Anhand einer Verschiebung der Resonanzfrequenz kann auch festgestellt werden, ob eine festgeklebte Ladung vorliegt.

Im Folgenden wird die Erfindung anhand von Figuren weiter beschrieben und erläutert. Hierbei zeigen
- FIG 1: eine Rohrmühle mit einem Antriebssystem,
- FIG 2: eine Spannung bzw. einen Strom als Funktion der Zeit,
- FIG 3: eine Modulation des Stroms bzw. der Spannung,
- FIG 4 bis FIG 6: unterschiedliche Störungen,
- FIG 7: eine Resonanzkurve sowie
- FIG 8: ein Mahlrohr, welches mit einer mechanischen Störung beaufschlagt wird.

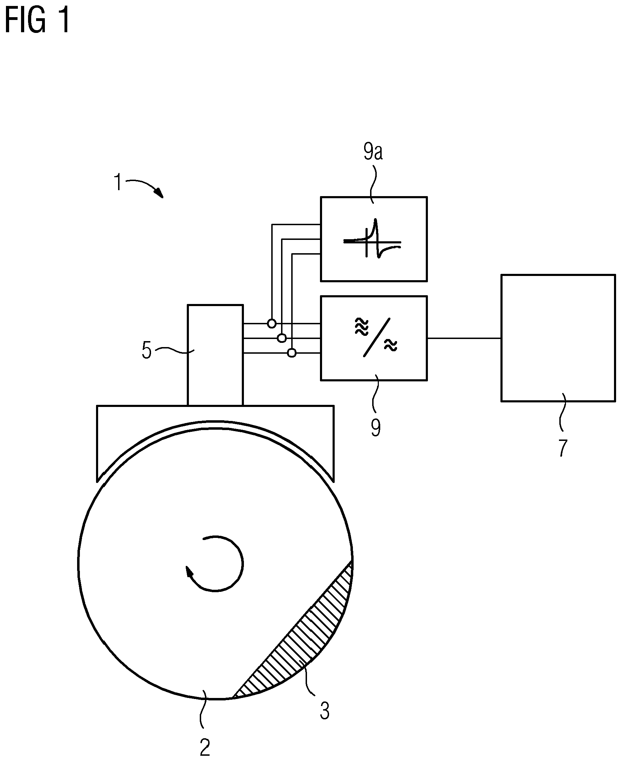

FIG 1 zeigt eine Rohrmühle 1 mit einem Antriebssystem. Die Rohrmühle 1 umfasst ein Mahlrohr 2, wobei das Mahlrohr 2 eine Ladung 3 aufweist. Das Mahlrohr 2 und die Ladung 3 werden von einem Motor 5 in eine Drehbewegung versetzt. Der Motor 5 wird von einem Umrichter 9 mit Strom bzw. Spannung versorgt. Der Umrichter 9 ist mit einer Steuereinrichtung 7 verbunden. Die Steuereinrichtung 7 dient zur Steuerung der Bewegung des Mahlrohrs 2 der Rohrmühle 1. Die Steuereinrichtung 7 dient mit Hilfe des Umrichters 9 zu einer wiederkehrenden Störung der Drehbewegung des Mahlrohrs 2 der Rohrmühle 1. Optional kann auch eine Störeinrichtung 9a eine Störspannung ΔU oder einen Störstrom ΔI auch den Motorstrom I des Motors 5 modulieren. Bei dem Motor 5 handelt es sich vorzugsweise um einen Segmentmotor, wobei hier nur ein Segment des Motors 5 schematisch dargestellt ist. Alternativ kann auch ein gewöhnlicher Motor 5 mit Hilfe eines Drehmomentwandlers zur Drehbewegung des Mahlrohrs eingesetzt werden.

Der Umrichter 9 dient optional zur Feststellung, ob die Ladung 3 an der Innenseite des Mahlrohrs 2 festgeklebt ist. Hierzu wird der Motorstrom I ermittelt und mit einem vorgegebenen Motorstrom verglichen.

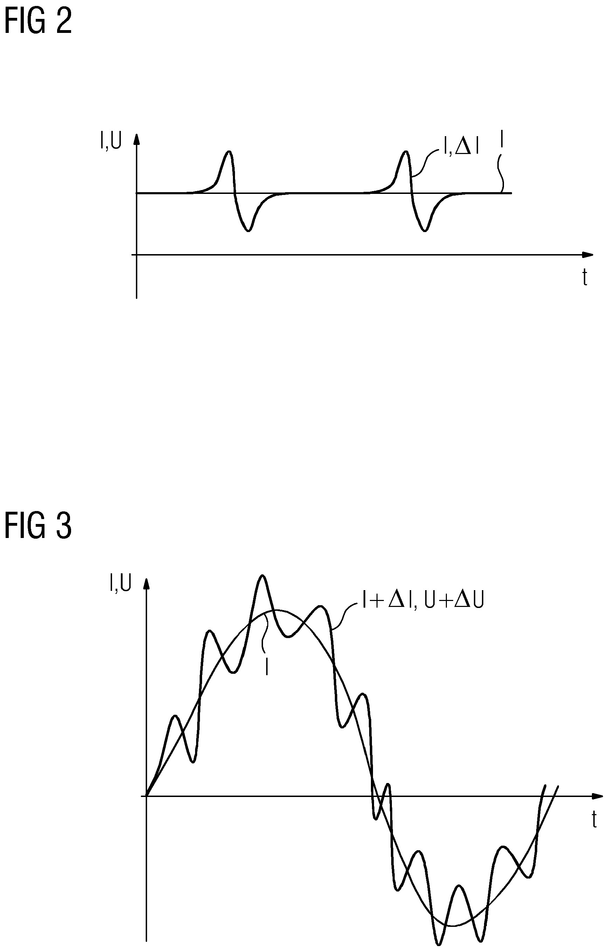

FIG 2 zeigt die Spannung bzw. den Strom als Funktion der Zeit t. Gezeigt ist ein Motorstrom I für den Motor 5 als Funktion der Zeit t. Zur besseren Übersicht ist der Antriebsstrom I als eine Gerade gezeigt. Auf den Motorstrom I wird ein Störstrom ΔI aufmoduliert bzw. aufgeprägt. Die Modulation des Motorstroms I mit dem Störstrom ΔI kann hierbei auf unterschiedliche Art und Weise erfolgen und entweder periodisch oder nicht periodisch ausgebildet sein.

FIG 3 zeigt eine Modulation des Stroms I bzw. einer Spannung U mit einer Störspannung ΔU bzw. einem Störstrom ΔI als Funktion der Zeit t. Hierbei ist der Motorstrom I als sinusförmiger Abschnitt gezeigt. Auf den sinusförmigen Motorstrom I wird der Störstrom ΔI aufmoduliert bzw. aufgeprägt, so dass ein Motorstrom I mit einer höher frequenten Störung zum Motor 5 geleitet wird. Der Störstrom ΔI bzw. die Störspannung ΔU dient zur Störung der Bewegung des Motors 5 und damit der Störung der Bewegung des Mahlrohrs 2.

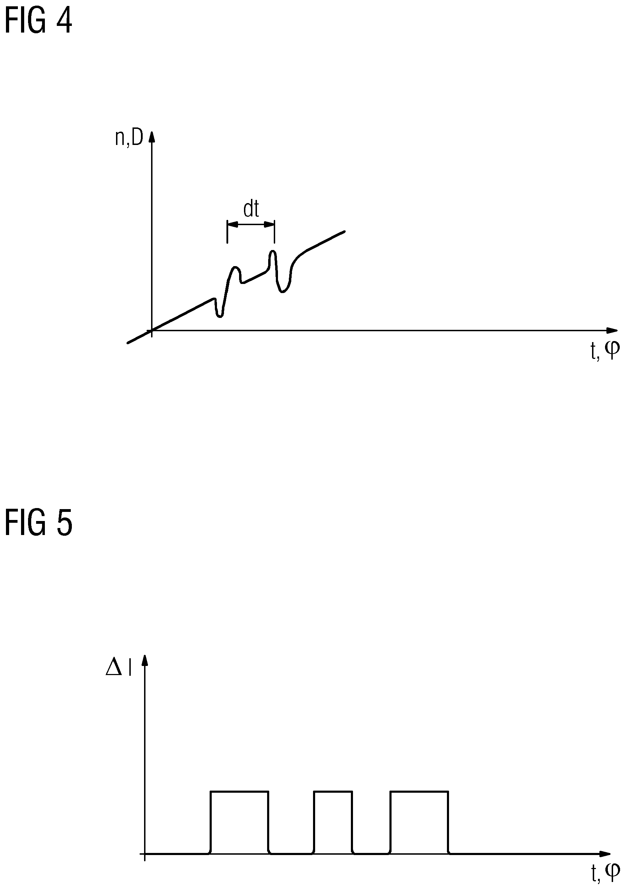

FIG 4, 5 und 6 zeigen unterschiedliche Störungen. Die jeweils gezeigten Störungen ergeben sich aus den in den FIG 4 bis 6 gezeigten Störströmen ΔI bzw. den gezeigten Störspannungen ΔU.

FIG 4 zeigt eine Störung einer Drehzahl n bzw. eines Drehmomentes D als Funktion der Zeit t oder eines Drehwinkels ϕ des Mahlrohrs 2. Hierbei nimmt die Drehzahl n bzw. das Drehmoment D am Anfang linear zu. In einem zeitlichen Abstand dt sind Störungen auf die Drehzahl n bzw. das Drehmoment D moduliert.

FIG 5 zeigt einen Störstrom ΔI als Funktion der Zeit t bzw. des Drehwinkels des Mahlrohrs 2. Der Störstrom ΔI ist hierbei als willkürlich ausgebildeter Rechteckstrom gezeigt. Die jeweilige Flanke des jeweiligen Störstromanstiegs erfolgt durch Zuschaltung eines konstanten Störstromes ΔI zum Motostrom I.

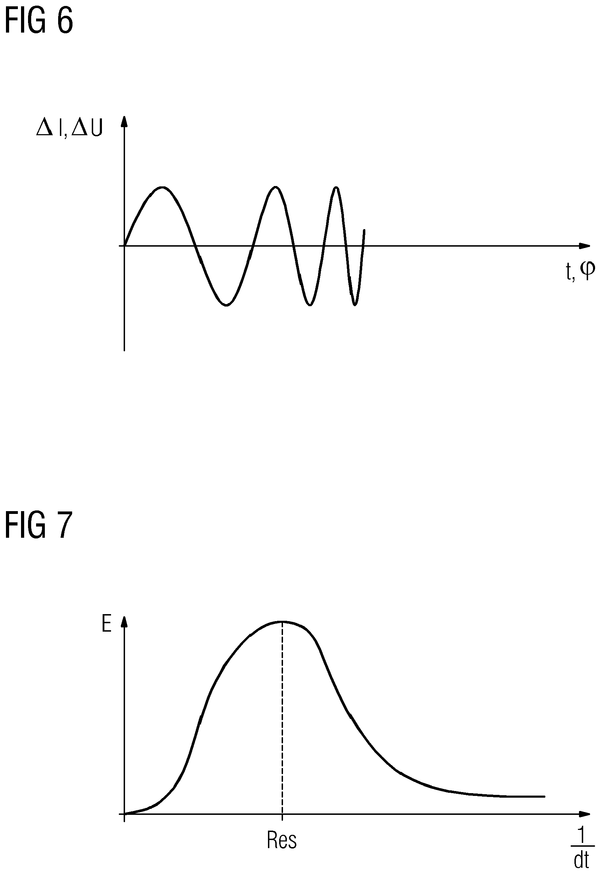

FIG 6 zeigt eine Störspannung ΔU bzw. einen Störstrom ΔI als Funktion der Zeit t bzw. des Drehwinkels ϕ. Die Störspannung ΔU bzw. der Störstrom ΔI ist sinusförmig ausgebildet, wobei die Periodendauer des Störstroms ΔI bzw. die Störspannung ΔU mit zunehmender Zeit t abnimmt. Somit wird die Frequenz der Störspannung ΔU bzw. des Störstroms ΔI größer mit der Zeit t. Eine solche Zunahme der Frequenz der Störspannung bzw. des Störstroms kann zu einer Resonanz Res führen, wie in FIG 7 gezeigt.

FIG 7 zeigt den Einfluss E der Störung als Funktion des inversen zeitlichen Abstandes der Störung. Gezeigt ist eine Resonanzkurve, die eine Resonanz Res in der ungefähren Mitte des inversen zeitlichen Abstands 1/dt aufweist.

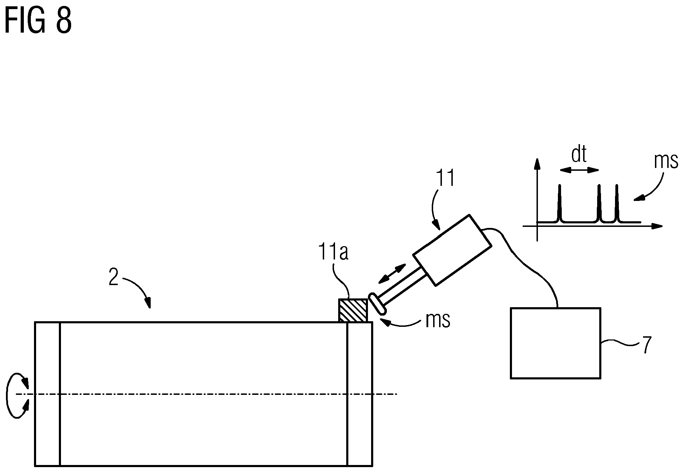

FIG 8 zeigt ein Mahlrohr 2, welches mit einer mechanischen Störung ms beaufschlagt wird. Das Mahlrohr 2 weist gemäß dieser Ausführung einen Vorsatz 11a auf, wobei der Vorsatz 11a durch ein mechanisches Störglied 11 wiederkehrend mit einer mechanischen Störung ms beaufschlagt wird. Die mechanische Störung ms kann durch ein wiederkehrendes Vor- und Zurückfahren des mechanischen Störgliedes 11 erfolgen, wie durch den Pfeil neben dem mechanischen Störglied 11 angedeutet ist.

Die mechanische Störung ms ist hier als wiederkehrender Kraftstoß ausgeführt. Die mechanischen Störungen ms weisen einen zeitlichen Abstand dt auf.

Das mechanische Störglied 11 wird von einer Steuereinrichtung 7 gesteuert. Die Steuereinrichtung 7 steuert vorzugsweise die Amplitude und den zeitlichen Abstand dt zwischen den mechanischen Störungen ms.

Zusammenfassend betrifft die Erfindung ein Verfahren und eine Vorrichtung zum Lösen einer festgeklebten Ladung 3 von der Innenwand eines Gefäßes 2, insbesondere eines Mahlrohrs 2. Um die festgeklebte Ladung 3, die auch als "frozen charge" bezeichnet wird, abzulösen, wird der Bewegung eine wiederkehrende Störung auf eine Drehbewegung des Mahlrohrs 2 aufgeprägt. Die wiederkehrende Störung wird vorzugsweise durch ein, dem Motorstrom I aufgeprägter, Störstrom ΔI erzeugt. Dabei wird der Störstrom ΔI vorzugsweise anhand der Art der Ladung und/oder anhand der physikalischen Eigenschaften der Rohrmühle ausgewählt. Durch die Erfindung wird das Lösen der festgeklebten Ladung 3 zumindest stark vereinfacht. Optional oder alternativ kann die wiederkehrende Störung auch durch eine mechanische Störung ms erfolgen.

## Patentansprüche

1. Verfahren zum Lösen einer festgeklebten Ladung von der Innenwand eines Mahlrohrs (2) einer Rohrmühle, wobei eine Antriebsvorrichtung zum Lösen der festgeklebten Ladung (3) und zur Bewegung des Mahlrohrs dient, wobei die Antriebsvorrichtung zwei Betriebsarten umfasst, wobei in der ersten Betriebsart das Antriebssystem die Drehbewegung des Mahlrohrs zum Mahlen ausführt, wobei in der zweiten Betriebsart das Antriebssystem die festgeklebte Ladung von der Innenwand des Gefäßes (2) löst, **dadurch gekennzeichnet, dass** in der zweiten Betriebsart ein Motor des Antriebssystems durch eine wiederkehrende Störung in seiner Drehbewegung wiederkehrend gestört ist.

2. Verfahren nach Anspruch 1, wobei das Störsignal zu einer wiederkehrenden ruckartigen Bewegung des Mahlrohrs führt.

3. Verfahren nach Anspruch 1 oder 2, wobei das Störsignal periodisch ist.

4. Verfahren nach einem der vorangehenden Ansprüche, wobei die Störung bis zu einem einstellbaren Zeitpunkt auf die Drehbewegung moduliert wird.

5. Verfahren nach einem der vorangehenden Ansprüche, wobei die Störung mit einem veränderlichen Zeitabstand (dt) erfolgt.

6. Verfahren nach einem der vorangehenden Ansprüche, wobei die Störung in ihrer Amplitude zunimmt.

7. Verfahren nach einem der vorangehenden Ansprüche, wobei die Störung eine Modulation der Drehbewegung des Mahlrohrs oder eine Modulation des auf das Mahlrohr wirkenden Drehmoments (D) bewirkt.

8. Verfahren nach einem der vorangehenden Ansprüche, wobei die Störung durch eine zusätzliche Spannung (ΔU) bzw. durch einen zusätzlichen Strom (ΔI) auf den Motor (5) des Antriebs moduliert wird.

9. Verfahren nach einem der vorangehenden Ansprüche, wobei die wiederkehrende Störung durch eine mechanische Einwirkung auf das Mahlrohr (2) erfolgt.

10. Verfahren nach einem der vorangehenden Ansprüche, wobei die Störung bis zu einem vorgegebenen maximalen Drehwinkel ausgehend von einer Ruhestellung moduliert wird.

11. Verfahren nach einem der vorangehenden Ansprüche, wobei eine Störung der Bewegung nur bei Feststellung einer festgeklebten Ladung (3) erfolgt.

12. Vorrichtung zum Lösen einer festgeklebten Ladung (3) von einer Innenseite eines Mahlrohrs einer Rohrmühle, aufweisend einen Motor (5) und eine Steuereinrichtung (7), optional einen Frequenzumrichter (9), wobei der Motor (5) zur Drehbewegung des Mahlrohrs (2) vorgesehen ist, **dadurch gekennzeichnet, dass** die Vorrichtung zur Durchführung eines Verfahrens nach einem der vorangehenden Ansprüche ausgebildet ist.

13. Vorrichtung nach Anspruch 9, weiter aufweisend eine Feststellungseinrichtung zur Feststellung der festgeklebten Ladung (3), wobei die Feststellungseinrichtung insbesondere zur Bereitstellung des Störsignals vorgesehen ist, solange eine Ladung in einem Mahlrohr klebt.

14. Vorrichtung nach Anspruch 12 oder 13, weiter aufweisend eine mechanische Bremse.

15. Vorrichtung nach einem der Ansprüche 12 bis 14, wobei der Motor (5) ein Segmentmotor ist.

16. Vorrichtung nach einem der Ansprüche 12 bis 15, weiter aufweisend ein Getriebe, wobei das Getriebe zwischen dem Motor (5) und dem Mahlrohr (2) angeordnet ist.

17. Industrielle Anlage zur Aufbereitung eines Grundstoffs, insbesondere eine Rohrmühle, aufweisend eine Vorrichtung nach einem der Ansprüche 10 bis 14.
